(19) Europäisches Patentamt
European Patent Office
Office européen des brevets

(11) **EP 1 546 581 B1**

(12) **EUROPÄISCHE PATENTSCHRIFT**

(45) Veröffentlichungstag und Bekanntmachung des Hinweises auf die Patenterteilung:
**12.12.2007 Patentblatt 2007/50**

(51) Int Cl.:
*F16H 61/00* (2006.01)     *F16H 37/08* (2006.01)

(21) Anmeldenummer: 03769204.3

(22) Anmeldetag: **19.09.2003**

(86) Internationale Anmeldenummer:
**PCT/DE2003/003118**

(87) Internationale Veröffentlichungsnummer:
**WO 2004/029483 (08.04.2004 Gazette 2004/15)**

(54) **VERFAHREN UND SYSTEM ZUM VERMINDERN EINES BEI DER BEREICHSUMSCHALTUNG EINES CVT-GETRIEBES MIT LEISTUNGSVERZWEIGUNG ENTSTEHENDEN RUCKS**

METHOD FOR REDUCING A JERK MOVEMENT GENERATED BY THE RANGE SELECTION OF A CVT GEARBOX WITH POWER BRANCHING

PROCEDE ET SYSTEME POUR DIMINUER UNE SECOUSSE PROVOQUEE PAR LA SELECTION DE GAMME D'UNE BOITE DE TRANSMISSION A VARIATION CONTINUE AVEC REPARTITION DE COUPLE

(84) Benannte Vertragsstaaten:
**AT BE BG CH CY CZ DE DK EE ES FI FR GB GR HU IE IT LI LU MC NL PT RO SE SI SK TR**

(30) Priorität: **21.09.2002 DE 10243902**

(43) Veröffentlichungstag der Anmeldung:
**29.06.2005 Patentblatt 2005/26**

(73) Patentinhaber: **LuK Lamellen und Kupplungsbau Beteiligungs KG**
**77815 Bühl (DE)**

(72) Erfinder:
• **REUSCHEL, Michael**
  **77833 Ottersweier (DE)**
• **VORNEHM, Martin**
  **77815 Bühl (DE)**
• **LAUINGER, Christian**
  **76532 Baden-Baden (DE)**
• **WALTER, Bernhard**
  **77704 Oberkirch (DE)**

(56) Entgegenhaltungen:
**EP-A- 0 866 242      EP-A- 0 905 413**
**EP-A- 1 146 252      DE-A- 19 642 503**
**US-A- 5 636 119      US-A1- 2002 086 764**

**Beschreibung**

Die Erfindung betrifft ein Verfahren und ein System zum Vermindern eines bei der Bereichsumschaltung eines CVT-Getriebes mit Leistungsverzweigung entstehenden Rucks. Dies ist aus dem Stand der Technik, wie der DE 196 42 503 A bekannt.

Dieses Dokument repräsentiert den nächliegenden Stand der Technik.

Getriebe mit kontinuierlich verstellbarer Übersetzung, insbesondere Kegelscheibenumschlingungsgetriebe mit zwei von einem Umschlingungsmittel umspannten Kegelscheibenpaaren, finden in Kraftfahrzeugen wegen der damit erzielbaren Komfortvorteile und Verbrauchseinsparungen zunehmend Verwendung. Wegen der begrenzten Übersetzungsverstellung, die die beiden Kegelscheibenpaare der auch Variator genannten Übersetzungsverstelleinheit durch gegensinnige Verstellung des Abstandes zwischen den Kegelscheiben der Kegelscheibenpaare ermöglichen, wird intensiv an der Weiterentwicklung solcher Getriebe dahingehend gearbeitet, dass der Verstellbereich des Variators doppelt genutzt wird, indem er einmal in der einen Richtung und zum anderen in der anderen Richtung durchfahren wird.

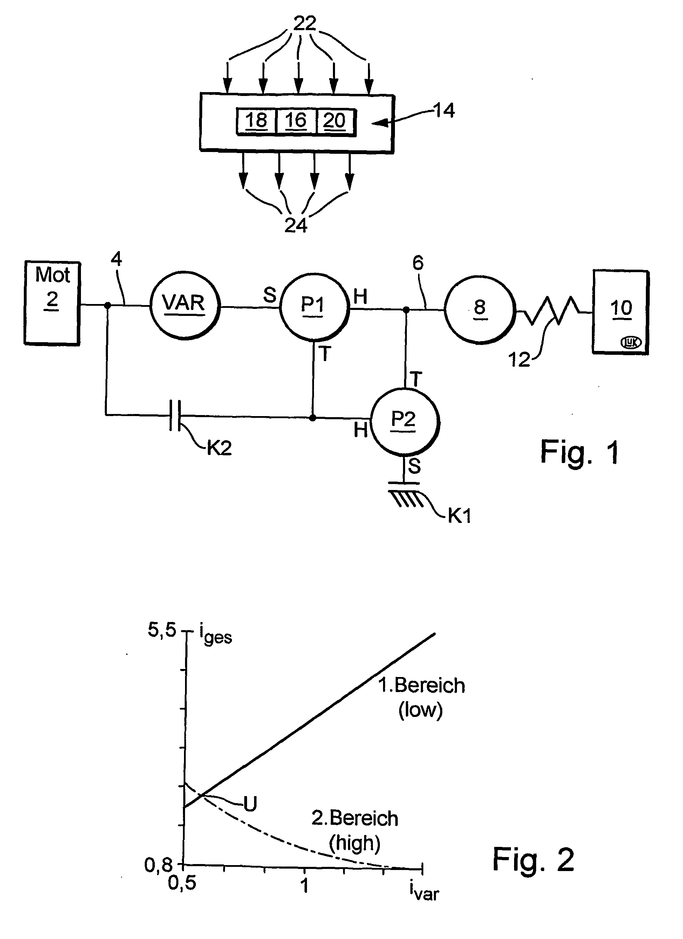

Fig. 1 stellt ein solches CVT-Getriebe mit Leistungsverzweigung beispielhaft dar:

Ein Antriebsmotor 2 eines Kraftfahrzeuges ist mit der Eingangswelle 4 eines zwei von einem Umschlingungsmittel umspannten Kegelscheibenpaares enthaltenden Variators VAR verbunden. Der Variator ist über einen ersten Planetensatz P1 mit der Ausgangswelle 6 des Getriebes verbunden. Ein Verzweigungspfad des Getriebes führt von der Eingangswelle 4 über eine Kupplung K2 und einen zweiten Planetensatz P2 zur Ausgangswelle 6.

Genauer ist die Kupplung K2 eingangsseitig drehfest mit der Eingangswelle 4 verbunden und ausgangsseitig mit dem Planetenträger des Planetensatzes P1 und dem Hohlrad der Planetenstufe 2. Die Ausgangswelle 6 ist drehfest mit dem Hohlrad der Planetenstufe 1 und dem Planetenträger des Planetensatzes P2 verbunden. Die Ausgangswelle des Variators ist mit dem Sonnenrad des Planetensatzes P1 verbunden.

Das Sonnenrad des Planetensatze P2 ist über eine Umschaltkupplung K1 wahlweise festsetzbar oder frei drehbar. Zur Anpassung an ein Fahrzeug ist die Ausgangswelle 6 über eine Übersetzungsstufe 8 mit den Antriebsrädern 10 des Fahrzeuges verbunden, wobei mit 12 die im Antriebsstrang des Fahrzeuges enthaltenen federnden Elemente symbolisiert sind, die den Antriebsstrang schwingungsempfindlich machen.

Der Variator VAR und die Umschaltkupplungen K1 und K2 werden von einem Steuergerät 14 mit einem Mikroprozessor 16, einem Programmspeicher 18 und einem Datenspeicher 20 gesteuert. Das Steuergerät 14 weist Eingänge 22 auf, die mit Sensoren des Antriebsstranges, beispielsweise Drehzahlsensoren, Lastsensoren, Temperatursensoren, einem Fahrpedalstellungssensor, einem Wählhebelstellungssensor usw. verbunden sind. Das Steuergerät 14 erzeugt an seinen Ausgängen 24 Ausgangssignale, entsprechend denen die Aktoren des Variators VAR und der Umschaltkupplungen K1 und K2 betätigt werden.

Aufbau und Funktion des beschriebenen Systems sind an sich bekannt und werden daher nicht im Einzelnen erläutert.

Fig. 2 stellt die Gesamtübersetzung $i_{GES}$ des Getriebes in Abhängigkeit von der Übersetzung $i_{VAR}$ des Variators VAR und den Stellungen der Umschaltkupplungen K1 und K2 dar.

Im ersten Bereich des Getriebes, indem mit hohen Übersetzungen bzw. niedriger Geschwindigkeit gefahren wird, ist die Umschaltkupplung K2 offen und die Umschaltkupplung K1 geschlossen, so dass das Sonnenrad des Planetensatzes P2 stillgesetzt ist und das Hohlrad des Planetensatzes P2 zusammen mit dem Planetenträger der Planetensatzes P1 dreht. Das Getriebe läuft im unverzweigten Bereich, in dem sich seine Übersetzung entsprechend der Übersetzung des Variators $i_{VAR}$ ändert. Wenn der Variator seine längstmögliche Übersetzung erreicht ($i_{VAR}$ ungefähr = 0,5) erfolgt bei der Gesamtübersetzung U eine Umschaltung, bei der die Umschaltkupplung K1 geöffnet und die Umschaltkupplung K2 geschlossen wird, so dass ein leistungsverzweigter Betrieb erfolgt, der beim Fahren mit höheren Geschwindigkeiten durchfahren wird und zur längst möglichen Gesamtübersetzung $i_{GES}$ des Getriebes von etwa 0,8 führt. Wie dargestellt, lässt sich auf diese Weise bei einer Spreizung von etwa 4 des Variators eine Spreizung des Gesamtgetriebes von etwa 7 erzielen.

Ein Problem, das bei der Bereichsumschaltung des Getriebes besteht, liegt darin, dass getriebeinterne Drehmassen, insbesondere wenn Umschaltungen während Drehzahlgradienten, beispielsweise Kick-down-Rückschaltungen erfolgen, große Beschleunigungsleistungen erfordern. Diese Beschleunigungsleistung geht bei der Zugkraft verloren und bewirkt dadurch einen im Fahrzeug spürbaren Umschaltruck bzw. ein Umschaltruckeln, der bzw. das unkomfortabel ist.

Der Erfindung liegt die Aufgabe zugrunde, solche Rucke bei der Bereichsumschaltung zu vermeiden.

Eine erste Lösung der Erfindungsaufgabe wird mit einem Verfahren zum Vermindern eines bei der Bereichsumschaltung eines CVT-Getriebes mit Leistungsverzweigung entstehenden Ruckes erreicht, bei dem der Variator des Kegelscheibenumschlingungsgetriebes mit einem kurzzeitigen Übersetzungsverstellimpuls derart beaufschlagt wird, dass ein dadurch hervorgerufener Auslöschungsruck den durch die Bereichsumschaltung hervorgerufenen Ruck schwächt.

Vorteilhafterweise wird der Auslöschungsruck unmittelbar nach der Bereichsumschaltung erzeugt. Die gesteuerte Änderung der Kupplungsmomente kann dann zum wesentlichen Teil abgeschlossen sein.

Vorteilhafterweise entspricht die Dauer des Auslöschungsruckes etwa einem Viertel einer Ruckelperiode.

Die Höhe des Auslöschungsruckes entspricht bei einer bevorzugten Durchführungsform des Verfahrens der Höhe des durch die Bereichsumschaltung hervorgerufenen Ruckes.

Bei einem für die genannten Verfahren vorteilhaft einsetzbaren Verfahren zum Steuern des Betriebes einer als Bremse ausgeführten Umschaltkupplung in einem CVT-Getriebe mit Leistungsverzweigung werden die Eingangs- und die Ausgangsdrehzahl des Variators des Kegelscheibenumschlingungsgetriebes sowie die Drehzahl im leistungsverzweigten Getriebeast gemessen, wird daraus die Schlupfdrehzahl der Umschaltkupplung ermittelt und einem Schlupfregler zugeführt.

Ein System zum Vermindern eines bei der Bereichsumschaltung eines CVT-Getriebes mit Leitungsverzweigung entstehenden Rucks zur Lösung der Erfindungsaufgabe enthält ein Getriebe mit einem Variator, zwei Planetensätze und zwei Umschaltkupplungen, mittels derer der Momentenfluss des Getriebes in unterschiedlicher Weise von einer von einem Motor antreibbaren Eingangswelle auf eine ein Fahrzeug antreibende Ausgangswelle umschaltbar ist, Aktoren zur Betätigung des Variators des Kegelscheibenumschlingungsgetriebes und der Umschaltkupplungen und ein Steuergerät zur Steuerung der Aktoren in Abhängigkeit von Betriebsparametern des Fahrzeuges und einem Fahrerwunsch, wobei das Steuergerät die Aktoren entsprechend einem Verfahren nach einem oder mehreren der vorgenannten Verfahrensansprüche steuert.

Die Erfindung wird im Folgenden anhand schematischer Zeichnungen beispielsweise und mit weiteren Einzelheiten erläutert.

Es stellen dar:

Fig. 1 ein Prinzipschaltbild eines an sich bekannten Getriebes mit Leistungsverzweigung,

Fig. 2 die Übersetzung des Getriebes gemäß Fig. 1, abhängig von der Variatorübersetzung,

Fig. 3 Diagramme zur Erläuterung eines erfindungsgemäßen Verfahrens,

Fig. 4 und 5 Diagramme zur Erläuterung der Wirksamkeit des Verfahrens gemäß Anspruch 3 und

Fig. 6 bis 8 Diagramme zur Erläuterung eines weiteren erfindungsgemäßen Verfahrens.

Wie aus Fig. 1 ersichtlich, steht im ersten Bereich (Fig. 2) bzw. nicht leistungsverzweigten Bereich das Sonnenrad des Planetensatzes P2, da die Kupplung K1 geschlossen ist. Im leistungsverzweigten Betriebes dagegen, drehen das Hohlrad des Planetensatzes P2 und der Planetenträger des Plantetensatzes P1 mit der Drehzahl der Eingangswelle 4 (Kupplung K2 geschlossen) und ist das Sonnenrad des Planetensatzes P2 frei drehbar, wobei seine Drehung durch die Drehung der Ausgangswelle 6 und der Eingangswelle 4 bzw. seines Planetenträgers und des Hohlrades bestimmt ist. Beim Umschalten müssen somit getriebeinterne Drehmassen beschleunigt und/oder abgebremst werden, was zu einem Ruck in Fahrzeuglängsrichtung führen kann.

Ganz allgemein existieren in leistungsverzweigten Getrieben getriebeinterne Drehmassen, deren Drehzahlverhalten weder synchron zur Eingangsdrehzahl noch synchron zur Ausgangsdrehzahl ist. Die Drehbeschleunigung dieser Drehmassen ändert sich beim Bereichswechsel sprungartig, so dass die Abtriebsleistung ebenfalls einen Sprung erfährt.

Bekannte Lösungen zur Ruckminimierung aufgrund solcher Drehzahlsprünge basieren auf Motoreingriffen oder dem Verschleifen von Kupplungsbetätigungen. Andere Lösungen schlagen spezielle Variator-Regler vor, die eine vorhandenes Ruckeln erkennen und den Variator darauf abgestimmt in dämpfend wirkender Weise ansteuern.

Erfindungsgemäß wird vorgeschlagen, eine Ruckelanregung durch eine gegensinnige Anregung auszulöschen. Notwendig dazu ist eine aus dem jeweiligen Getriebe herleitbare Kenntnis der Größe und des Zeitpunktes der Anregung.

Die für die Anstellung des Variators VAR wesentliche Veränderung bei einer Bereichsumschaltung betrifft das Variatormoment, das Größe und Vorzeichen ändert. Als Folge davon ändern sich der Anpressbedarf und die Stützung, d. h. die zur Aufrechterhaltung der Übersetzung erforderliche Anpressung zwischen den Kegelscheibenpaaren und dem Umschlingungsmittel. Die bei einer Bereichsumschaltung erfolgenden Veränderungen sind grundsätzlich bekannt und können daher steuerungstechnisch vorgehalten werden, so dass eine Bereichsumschaltung nicht mit einem plötzlichen Weglaufen der Übersetzung verbunden ist.

Erfindungsgemäß erfolgt über eine Nachsteuerung bzw. Nachregelung des Anpressbedarfes über die Stützung hinausgehend eine kurzzeitige Verstellung des Variators zur Erzeugung eines Auslöschungsrucks.

Ein solcher Auslöschungsruck kann theoretisch vor oder nach oder auch während der Bereichsumschaltung erzeugt werden. In beiden Fällen funktioniert das Prinzip der Auslöschung. Insgesamt hat sich in vielen Anwendungsfällen als vorteilhaft herausgestellt, den Auslöschungsruck nach der Bereichsumschaltung zu erzeugen.

Der Auslöschungsruck wird dadurch erzeugt, das ein Verstellkraftimpuls zur Verstellung des Variators erzeugt wird, der definierte Höhe und Dauer hat. Die Dauer liegt vorteilhaft im Bereich eines Viertels einer Ruckelperiode, insbesondere im Bereich von 50 Millisekunden bis 200 Millisekunden, wie sie sich häufig ergibt. Die Höhe des aktiv induzierten Auslöschungsruckes ist proportional zur Stärke der auszulöschenden Anregung. Für die Höhe der auszulöschenden Anregung ergibt bei zahlreichen Getrieben, insbesondere Getrieben mit dem Aufbau gemäß Fig. 1, der Antriebsdrehzahlgradient ein brauchbares Maß. Andere geeignete Signale sind der Übersetzungsgradient oder der beim Bereichswechsel zu erwartende Beschleunigungssprung der getriebeinternen Drehmasse.

Ebenfalls geeignete Größen zur Bestimmung der Höhe des anzuwendenden Auslöschungsruckes sind so genannte Soll-Signale (z. B. Soll-Übersetzungsveränderung oder Soll-Drehzahlgradient). Diese Soll-Signale hängen in der Regel weniger empfindlich von gemessenen Signalen ab und sind somit rückkopplungsfreier (Rückkopplungen sind potentiell instabil). Typische Werte für die Höhe eines Auslöschungsruckes liegen zwischen 10 kN und 50 kN. Die Proportionalitätskonstante, die den Zusammenhang zwischen der Höhe des Auslöschungsruckes und der Stärke der auszulöschenden Anregung angibt, kann beispielsweise experimentell ermittelt werden.

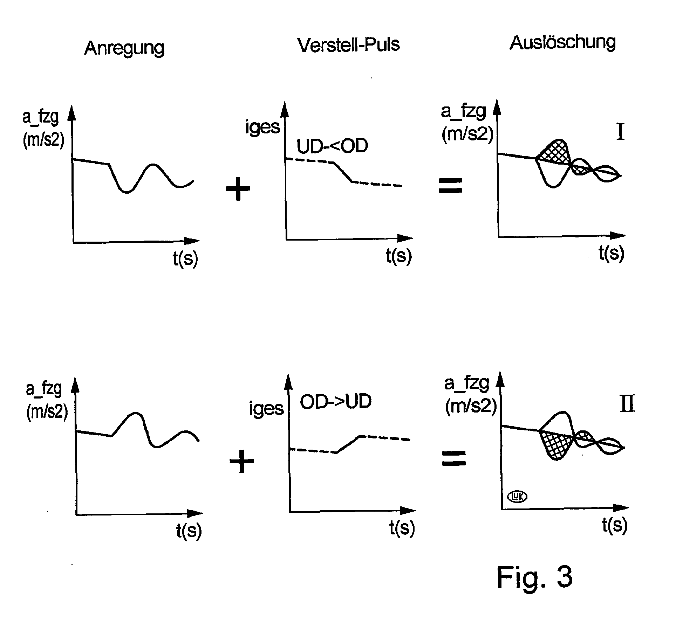

Fig. 3 erläutert das erfindungsgemäße Verfahren anhand zweier Beispiele:

Die beiden linken Figuren ergeben den ohne Einsatz des erfindungsgemäßen Auslöschungsruckes vorhandene Fahrzeugbeschleunigung $a_{FZG}$ in m/s$^2$ abhängig von der Zeit t in Sekunden. Die mittleren Grafiken zeigen den Übersetzungsverstellimpuls zur Verstellung der Getriebegesamtübersetzung $i_{GES}$. Dieser Verstellimpuls führt zu einem Auslöschungsruck, der in den beiden rechten Grafiken schraffiert dargestellt ist.

Die oberen drei Grafiken (1) geben die Verhältnisse für ein Fahrzeug an, das bei einer Bereichsumschaltung einen Verzögerungsruck erfährt (Auslöser der Anregungsschwingung ist eine Verminderung der Beschleunigung). Diesem Anregungsruckeln wird gemäß der mittleren oberen Grafik ein Verstellimpuls überlagert, in dem die Getriebeübersetzung in Richtung von UD nach OD geändert wird, wodurch ein Auslöschungsruck (rechts oben in Fig. 3) erzeugt wird, der dem Anregungsdruck entgegengesetzt ist, so dass sich das Anregungsruckeln und das durch den Verstellimpuls erzeugte Auslöschungsruckeln auslöschen, wodurch die Bereichsumschaltung weitgehend ruckfrei erfolgt.

Die unteren drei Skizzen (II) der Fig. 3 zeigen die Verhältnisse für den Fall, dass das Fahrzeug bei einer Bereichsumschaltung ohne einen gezielten Stellimpuls für die Variatorverstellung zunächst beschleunigt wird. Der Verstellimpuls erfolgt hier in Richtung einer Verstellung der Getriebeübersetzung von OD nach UD.

Insgesamt lässt sich erfindungsgemäß somit bei einer gezielten Einleitung eines Verstellimpulses in den Variator der Ruck bei der Bereichsumschaltung weitgehend vermeiden.

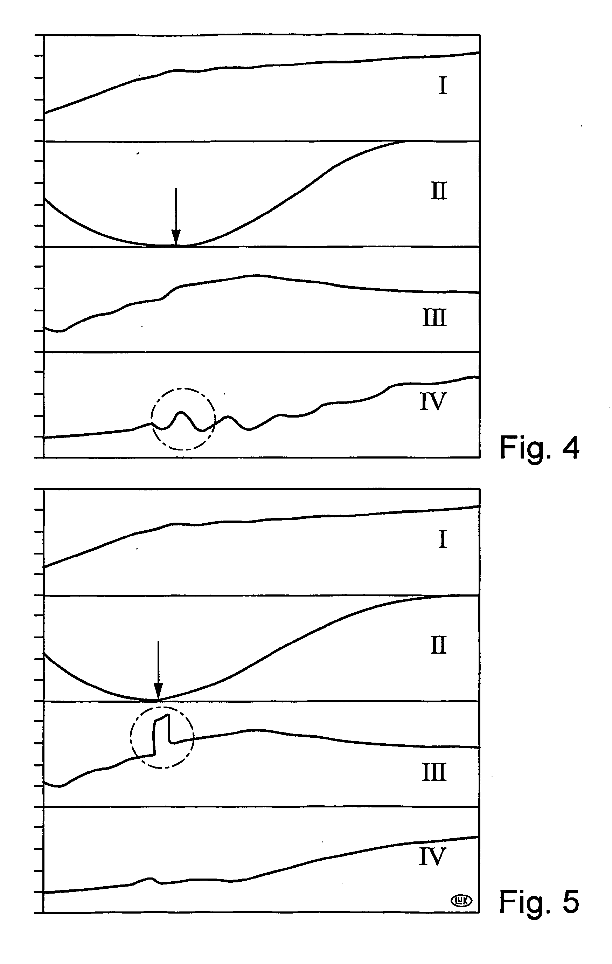

Anhand der Fig. 4 und 5 wird ein spezielles Beispiel für die Wirksamkeit des erfindungsgemäßen Verfahrens erläutert. In Fig. 4 ist jeweils auf der Abszisse die Zeit dargestellt. Die oberste Kurve I gibt die Drehzahl des abtriebsseitigen Scheibensatzes des Variators an, die Kurve II gibt die Übersetzung des Variators an, wobei die Bereichsumschaltung bei der minimalen Übersetzung (siehe Pfeil) erfolgt. Die Kurve III gibt die Verstellkraft des Variators an und die Kurve IV gibt die Fahrzeugbeschleunigung an.

Wie ersichtlich, (Kurve IV) ruckelt das Fahrzeug bei der Bereichsumschaltung stark.

Fig. 5 zeigt die gleichen Verhältnisse, wie Fig. 4, jedoch mit dem Unterschied, dass die Verstellkraft bei bzw. unmittelbar nach der Bereichsumschaltung überhöht wird. Dies führt zu einem in der Kurve II erkennbaren leichten S-förmigen Verlauf, was wiederum einen Auslöschungsimpuls hervorruft, so dass gemäß Fig. 4 die Fahrzeugbeschleunigung bei der Bereichsumschaltung im Wesentlichen ruckfrei erfolgt.

Wie erläutert, ist es somit möglich, einen bei der Bereichsumschaltung auftretenden Umschaltruck durch einen beim Umschalten auf den Variator aufgebrachten Verstellimpuls, der zu einem dem Umschaltimpuls entgegengesetzten Auslöschungsimpuls führt, weitgehend oder ganz zu unterdrücken. Richtung und Größe des in Richtung einer Verstellung, der Variatorübersetzung wirksamen Verstellimpulses hängen von der Getriebekonstruktion und der Umschaltrichtung ab.

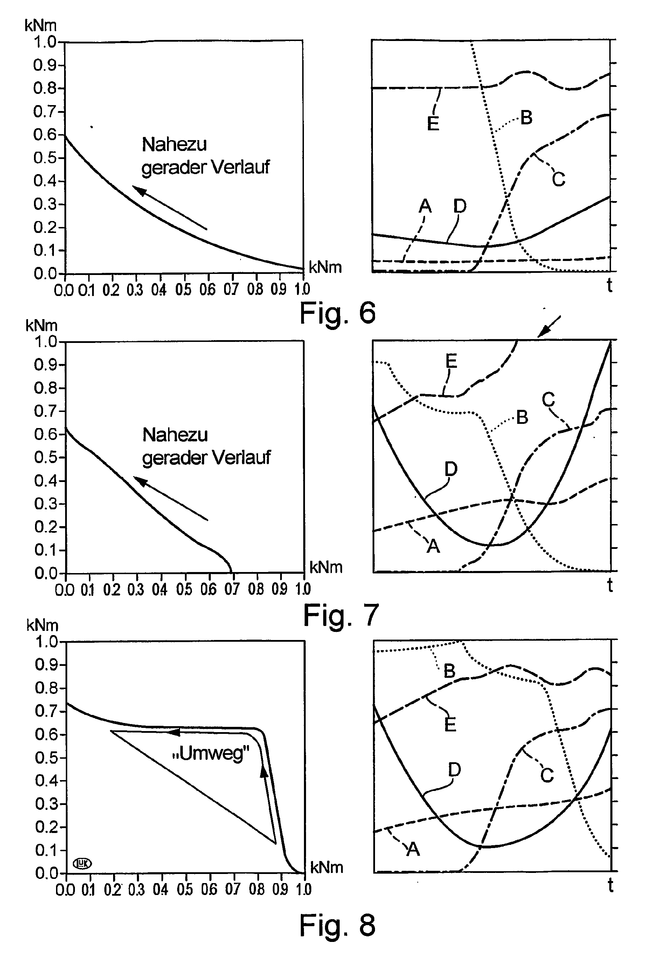

Eine weitere Möglichkeit, den Umschaltruck zu beseitigen bzw. zu vermeiden, besteht in einer Modifizierung der Betätigung der Umschaltkupplungen K1 und K2 (Fig. 1), die anhand der Fig. 6 bis 8 erläutert wird.

Im linken Teil der Fig. 6 ist verdeutlicht, wie in dem Maße, in dem die zu lösende Umschaltkupplung (Abszisse) geöffnet wird, die übernehmende, zu schließende Kupplung geschlossen wird (Ordinate). Dargestellt ist jeweils das übertragbare Reibungsmoment der Umschaltkupplungen in kNm. Für die beiden Kupplungsmomente gilt gemäß dem linken Teil der Fig. 6 annäherungsweise eine Geradengleichung.

Im rechten Teil der Fig. 6 stellt die Abszisse jeweils die Zeit t entsprechend der Umschaltung von nur eine Umschaltkupplung geschlossen zu nur die andere Umschaltkupplung geschlossen dar. Die Kurve A gibt die Motordrehzahl an, die Kurve B gibt das übertragbare Drehmoment der öffnenden Umschaltkupplung an, die Kurve C gibt das übertragbare Drehmoment der zu schließenden Kupplung an, die Kurve D zeigt die Variator-Übersetzung (Umschaltung im Minimum) und die Kurve E gibt die Fahrzeugbeschleunigung an. Wie ersichtlich verläuft die Umschaltung in dem dargestellten Fall ohne wesentliche Motordrehzahländerung mit einem leichten Fahrzeugruckeln nach der Umschaltung.

Fig. 7 entspricht der Fig. 6; der Verlauf der Kupplungsmomente ist wiederum an eine Gerade angenähert. Im Fall der Fig. 7 erfolgt die Bereichsumschaltung des Getriebes jedoch während eines Drehzahlgradienten des Motors. Dem Drehzahlgradienten entsprechend ist der Bereichswechsel mit einer großen Überschussbeschleunigung verbunden, was zu einem starken Fahrzeugruck (Pfeil an nicht voll dargestellter Kurve E) mit nachfolgendem Ruckeln führt.

Fig. 8 zeigt die Verhältnisse der Fig. 7, jedoch mit einer "Umweg-Überschneidung". Wie aus dem linken Teil der Fig. 8 und den Kurven B und C ersichtlich, ist die übernehmende Kupplung bei der Umschaltung gemäß Fig. 8 bereits geschlossen, während die lösende Kupplung noch hohe Momente überträgt. Dieser Zustand ist mit einer Verspannung verbunden, die ein vorbestimmtes Maß erreicht und die Überschussbeschleunigung aufzehrt. Für die beiden Kupplungsmomente gilt keine Geradengleichung mehr, sondern ihr Verlauf zeigt einen deutlichen "Umweg". Dieser Umweg bedeutet den gleichzeitig eingerückten Zustand beider Kupplungen. Die resultierende Fahrzeugbeschleunigung (Kurve E der Fig. 8) hat im Vergleich zur Kurve E der Fig. 7 keinen deutlichen Überschwinger mehr. Im Ergebnis ist der Bereichswechsel trotz der Drehzahlgradienten (Kurve A) im Vergleich zu der der Fig. 7 deutlich komfortabler.

Es versteht sich, dass die Verfahren gemäß den Fig. 3 und Fig. 5 sowie Fig. 8 bei leistungsverzweigten Getrieben unterschiedlichster Bauart angewendet werden können, wobei der Verstellpuls (Fig. 3) und der Umweg (Fig. 8) jeweils zweckentsprechend gewählt werden. Genauso kann es vorteilhaft sein, den Umweg noch kurviger zu gestalten. Dadurch kann z. B. in der Mitte des Bereichswechsels eine Verspannungslücke erzeugt werden, was zur Auslöschung entgegengesetzter Rucke vorteilhaft ist.

Ein weiteres Problem, das sich bei der Steuerung der Bereichsumschaltung leistungsverzweigter CVT-Getriebe stellt, ist folgendes:

Zur Ansteuerung bzw. Regelung solcher leistungsverzweigter Getriebe werden im Allgemeinen lediglich zwei Drehzahlsensoren für die Drehzahl der beiden Kegelscheibenpaare benötigt. Sofern der Getriebezustand durch Umschaltkupplungen bestimmt wird (jeweils eine Kupplung schlupffrei; Umschaltkupplungen $K_1$ und $K_2$ der Fig. 1) können die notwendigen Funktionen der Übersetzungssteuerung bzw. -regelung des Variators aus den Drehzahlen der Scheibensätze, die Betätigung der Umschaltkupplungen ebenfalls aus den Drehzahlen der Scheibensätze und die Anfahrregelung aus der Drehzahl des eingangsseitigen Scheibensatzes und der Motordrehzahl dargestellt werden.

Zur Kosten- und Bauraumoptimierung ist es vorteilhaft, eine in Fig. 1 nicht dargestellte Anfahrkupplung von vornherein entfallen zu lassen und das Anfahren über die Low-Bereichs-Kupplung (Kupplung K1 in Fig. 2) darzustellen. Zur weiteren Kosten- und Bauraumoptimierung ist es vorteilhaft, statt eines vollständigen Zweimassenschwungrades entweder nur die Sekundärmasse einzusparen (dann wirkt die Masse des eingangsseitigen Scheibensatzes als Sekundärmasse des Zweimassenschwungrades) oder das gesamte Zweimassenschwungrad einzusparen und zur Geräuschverminderung eine Schlupfregelung einzusetzen. Für eine Schlupfregelung ist in jedem Fall ein möglichst exaktes Schlupfsignal der geregelten Kupplung erforderlich.

Bei dem Getriebe gemäß Fig. 1 ist der Schlupf der Umschaltkupplung K1, die eine Bremse für das Sonnenrad darstellt, identisch mit der Drehzahl der über die Kupplung gebremsten Welle des Sonnenrades. Beim Schlupfabbau bzw. Schließen der Kupplung wird diese Drehzahl sehr gering, was ihre Erfassung mit einem Sensor erschwert. Übliche Drehzahlsensoren basieren nämlich auf der Auswertung der Impulse eines Trigger-Rades. Bei geringer Drehzahl werden nur wenige Impulse in langen Zeitabständen erzeugt. Dies macht eine Regelung unmöglich, wenn nicht aufwendige Trigger-Räder mit feiner Teilung eingesetzt werden.

Erfindungsgemäß wird daher vorgeschlagen, ergänzend zu den Drehzahlen der Eingangswelle 4 von VAR und der Drehung der Ausgangswelle von VAR, auch die Drehzahl im verzweigten Getriebeast (Drehzahl der Ausgangswelle der Umschaltkupplung K2) bzw. des Planetenträgers des Planetensatzes P1, gleich der Drehzahl des Hohlrades des Planetensatzes P2 mit einem Sensor zu erfassen. Diese Drehzahl liegt stets in einem präzise messbaren Bereich zwischen beispielsweise 1.000 und 6.000 rpm. Aus den drei gemessenen Drehzahlen kann aufgrund der vorhandenen Übersetzungsverhältnisse die Drehzahl der gebremsten Welle der Umschaltkupplung K1 bzw. die Schlupfdrehzahl genau berechnet werden und einem im Steuergerät 14 enthaltenen Schlupfregler zugeführt werden.

Für die dargestellte Getriebekonfiguration ergibt sich:

$$n_{S2} = n_V * (i_1 + i_2 - 1)/i1 - n_{SS2} * (1 - i_2)/i_1,$$

wobei

$n_{S2}$ die Drehzahl des Sonnenrades der Planetensatzes P2,
$n_V$ Drehzahl des Hohlrades des Planetensatzes P2,
$i_2$ Übersetzung des Planetensatzes P2 und
$n_{SS2}$ Drehzahl des abtriebsseitigen Scheibensatz des Variators VAR.

Im Falle von $i_1 = -2,5$ und $i_2 = -1,5$ ergibt sich die einfache Formel:

$$n_{S2} = 2 * n_V - n_{SS2}.$$

Aus dem Vorstehenden ist ersichtlich, dass die Genauigkeit der ermittelten Drehzahl des Sonnenrades des Planetensatzes P2 der Genauigkeit der anderen Drehzahlen entspricht.

Eine ähnliche Formel kann hergeleitet werden, um aus der Abtriebsdrehzahl des Getriebes und der Drehzahl des abtriebseitigen Scheibensatzes des Variators die Drehzahl $n_{S2}$ zu errechnen.

Die vorstehend geschilderten Verfahren können einzeln oder in beliebiger Kombination miteinander eingesetzt werden.

**Patentansprüche**

1.   Verfahren zum Vermindern eines bei der Bereichsumschaltung eines CVT-Getriebes mit Leistungsverzweigung entstehenden Rucks, bei welchem Verfahren der Variator des Kegelscheibenumschlingungsgetriebes mit einem kurzzeitigen Übersetzungsverstellimpuls derart beaufschlagt wird, dass ein **dadurch** hervorgerufener Auslöschungsruck den durch die Bereichsumschaltung hervorgerufenen Ruck schwächt.

2.   Verfahren nach Anspruch 1, wobei der Auslöschungsruck unmittelbar nach der Bereichsumschaltung erzeugt wird.

3.   Verfahren nach Anspruch 1 oder 2, wobei die Dauer des Auslöschungsrucks etwa einem Viertel einer Ruckelperiode entspricht.

4.   Verfahren nach einem der Ansprüche 1 bis 4, wobei die Höhe des Auslöschungsrucks der Höhe des durch die Bereichsumschaltung hervorgerufenen Rucks entspricht.

5.   System zum Vermindern eines bei der Bereichsumschaltung eines CVT-Getriebes mit Leistungsverzweigung entstehenden Rucks, enthaltend ein Getriebe mit einem Variator (VAR), zwei Planetensätzen (P1, P2) und zwei Umschaltkupplungen (K1, K2), mittels derer der Momentenfluss des Getriebes in unterschiedlicher Weise von einer von einem Motor antreibbaren Eingangswelle auf eine ein Fahrzeug antreibende Ausgangswelle umschaltbar ist, Aktoren zur Betätigung des Variators des Kegelscheibenumschlingungsgetriebes und der Umschaltkupplungen und ein Steuergerät zur Steuerung der Aktoren in Abhängigkeit von Betriebsparametern des Fahrzeugs und einem Fahrerwunsch, wobei das Steuergerät die Aktoren entsprechend einem Verfahren nach einem oder mehreren der Ansprüche 1 bis 4 steuert.

**Claims**

1.   Method for reducing a jolt that occurs during the range shifting of a CVT transmission with power branching, in which method the variator of the belt-driven conical-pulley transmission is subjected to a brief transmission ratio adjusting impulse in such a way that a canceling jolt caused thereby attenuates the jolt caused by the range shifting.

2.   Method according to Claim 1, wherein the canceling jolt is produced immediately after the range shifting.

3.   Method according to Claim 1 or 2, wherein the duration of the canceling jolt corresponds to approximately one fourth of a jolting period.

4.   Method according to one of Claims 1 through 3, wherein the severity of the canceling jolt corresponds to the severity of the jolt caused by the range shifting.

5.   System for reducing a jolt that occurs during the range shifting of a CVT transmission with power branching, comprising a transmission with a variator (VAR), two planetary gear sets (P1, P2), and two change-over clutches (K1, K2) by means of which the torque flow of the transmission is switchable in varying ways from an input shaft driven by an engine to an output shaft driving a vehicle, actuators to actuate the variator of the belt-driven conical-pulley transmission and the change-over clutches, and a control device to control the actuators depending on operating parameters of the vehicle and a driver wish, wherein the control device controls the actuators corresponding to a method according to one or more of Claims 1 through 4.

**EP 1 546 581 B1**

**Revendications**

1. Procédé pour diminuer une secousse provoquée par la sélection de gamme d'une boîte de transmission à variation continue avec répartition de couple, dans lequel le variateur de la boîte de transmission à poulies coniques enveloppées reçoit pendant une courte durée une impulsion de réglage de rapport d'engrenage de sorte qu'une secousse d'effacement affaiblisse la secousse provoquée par la sélection de gamme.

2. Procédé selon la revendication 1, dans lequel on génère la secousse d'effacement directement après la sélection de gamme.

3. Procédé selon la revendication 1 ou 2, dans lequel la durée de la secousse d'effacement correspond sensiblement à un quart d'une période d'à-coups.

4. Procédé selon l'une quelconque des revendications 1 à 4, dans lequel la grandeur de la secousse d'effacement correspond à la grandeur de la secousse provoquée par la sélection de gamme.

5. Système pour diminuer une secousse provoquée par la sélection de gamme d'une boîte de transmission à variation continue avec répartition de couple, comprenant une boîte de transmission avec un variateur (VAR), deux jeux de planètes P1, P2) et deux embrayages de commutation (K1, K2) qui permettent de commuter le flux de couple de la boîte de transmission de différentes façons depuis un arbre d'entrée entraîné par un moteur sur un arbre de sortie entraînant un véhicule, des actionneurs pour actionner le variateur de la boîte de transmission à poulies coniques enveloppées et des embrayages de commutation, et un appareil de commande pour commander les actionneurs en fonction de paramètres de fonctionnement du véhicule et d'un souhait de conducteur, l'appareil de commande commandant les actionneurs selon un procédé suivant une ou plusieurs des revendications 1 à 4.

7

22

18 16 20

14

24

Mot
2

4

VAR

S P1 H

T

6

8

10
LuK

12

K2

T

P2

H

S

K1

Fig. 1

5,5 i_ges

1.Bereich
(low)

U

2.Bereich
(high)

0,8
0,5          1          i_var

Fig. 2

Anregung        Verstell-Puls        Auslöschung

Fig. 3

Fig. 4

Fig. 5

Fig. 6

Fig. 7

Fig. 8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 19642503 A